# EUROPÄISCHE PATENTSCHRIFT

(11) **EP 2 547 741 B1**
(45) Veröffentlichungstag und Bekanntmachung des Hinweises auf die Patenterteilung: **05.03.2014**
(21) Anmeldenummer: 11709907.7
(22) Anmeldetag: 14.03.2011
(51) Int. Cl.: C09J 7/00, C09J 7/04, C09J 133/08

(54) **POLYMERFILM MIT MEHRPHASIGER FILMMORPHOLOGIE**
POLYMER FILM HAVING MULTIPHASE FILM MORPHOLOGY
FILM POLYMÈRE À MORPHOLOGIE DE FILM MULTIPHASE

(30) Priorität: 18.03.2010 EP 10156913
(43) Veröffentlichungstag der Anmeldung: 23.01.2013
(73) Patentinhaber: BASF SE, 67056 Ludwigshafen (DE)
(72) Erfinder: GERST, Matthias, 67487 Maikammer (DE); AUCHTER, Gerhard, 67098 Bad Dürkheim (DE); STARK, Rüdiger, 68519 Viernheim (DE)
(86) Internationale Anmeldenummer: PCT/EP2011/053773
(87) Internationale Veröffentlichungsnummer: WO 2011/113782

(56) Entgegenhaltungen:
- EP-A1- 1 273 643
- EP-A1- 1 923 438
- EP-A2- 0 574 803
- EP-A2- 1 333 078

## Beschreibung

Die Erfindung betrifft einen Polymerfilm mit mehrphasiger Filmmorphologie, welcher innerhalb einer Schicht Bereiche eines ersten Polymers und Bereiche eines zweiten Polymers aufweist und hergestellt ist aus einer wässrigen Polymerdispersion, enthaltend die beiden Polymere in dispergierter Form und einen Tackifier, wobei die Polymere durch bestimmte Glasübergangstemperaturen sowie durch ein unterschiedliches Lösevermögen für den Tackifier charakterisiert sind. Die Erfindung betrifft auch Polymerdispersionen zur Herstellung erfindungsgemäßer Polymerfilme sowie Anwendungen als Klebstoff, Beschichtungsmittel oder Dichtungsmittel.

Bei Klebstoff-, Beschichtungs- und Dichtungsmitteln ist häufig eine Kombination von Eigenschaften gewünscht, welche zueinander invers proportional sind. Das bedeutet, dass die Verbesserung einer gewünschten Eigenschaft, beispielsweise durch die Erhöhung der Einsatzmenge eines Additivs, durch eine Verschlechterung einer anderen gewünschten Anwendungseigenschaft in Kauf genommen werden muss. Zwei wichtige Anwendungseigenschaften von Haftklebstoffen sind die Schälfestigkeit (Adhäsion, Haftung der Klebstoffschicht am Substrat) und die Scherfestigkeit (Kohäsion, innere Festigkeit der Klebstoffschicht). Die Zunahme der Scherfestigkeit ist normalerweise mit einer Verringerung der Schälfestigkeit korreliert und umgekehrt.

Aufgabe der vorliegenden Erfindung war es, Möglichkeiten zur Verbesserung einer der gewünschten Anwendungseigenschaften zur Verfügung zu stellen, ohne die andere gewünschte Eigenschaft zu beeinträchtigen.

Es wurde gefunden, dass die Aufgabe gelöst werden kann durch Polymerfilme mit einer mehrphasigen Filmmorphologie, wobei eine gezielte Steuerung der Löslichkeit eines bestimmten Additivs in einer bestimmten Polymerphase zur gezielten Verbesserung einer gewünschten Anwendungseigenschaft ohne Beeinträchtigung anderer Anwendungseigenschaften führt.

Gegenstand der Erfindung ist ein Polymerfilm mit mehrphasiger Filmmorphologie, wobei der Film innerhalb einer Schicht Bereiche eines ersten Polymers und Bereiche mindestens eines zweiten Polymers aufweist;
wobei der Film hergestellt wird aus einer wässrigen Polymerdispersion, enthaltend das erste Polymer in dispergierter Form, mindestens ein zweites Polymer in dispergierter Form und mindestens einen Tackifier;
wobei die Glasübergangstemperatur des zweiten Polymers größer ist als die Glasübergangstemperatur des ersten Polymers und kleiner ist als 20°C ;
wobei die Konzentration des Tackifiers im Polymerfilm in den Bereichen des ersten Polymers größer ist als in den Bereichen des zweiten Polymers.

Ein Polymerfilm mit mehrphasiger Filmmorphologie ist ein aus mindestens zwei unterschiedlichen Polymeren gebildeter Film, in welchem die Polymere in ein und derselben Schicht in unterschiedlichen, räumlich getrennten Bereichen (im Folgenden auch Phasen genannt) vorliegen. Bei den Bereichen kann es sich um isolierte Bereiche oder um co-kontinuierliche Netzwerke bildende Bereiche handeln. Im Falle von isolierten Bereichen kann eine Phase kontinuierlich sein und die andere kann als diskontinuierliche Phase innerhalb der kontinuierlichen Phase vorliegen. Vorzugsweise handelt es sich um co-kontinuierliche Phasen, d.h. der Film weist co-kontinuierliche Netzwerke bildende Bereiche eines ersten Polymers sowie co-kontinuierliche Netzwerke bildende Bereiche mindestens eines zweiten Polymers auf.

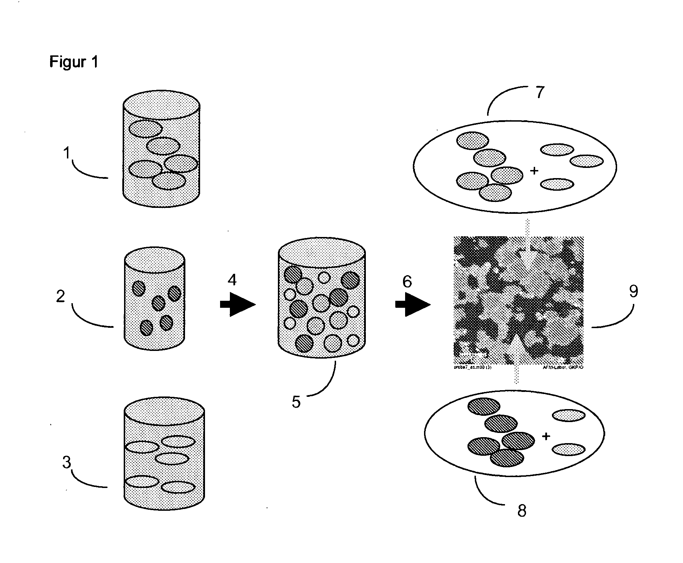

Figur 1 zeigt eine schematische Darstellung für die Bildung eines mehrphasigen Polymerfilms mit unterschiedlicher Verteilung eines Tackifiers in den verschiedenen Phasen. Eine wässrige Dispersion mit 5 Teilen eines ersten Polymers (1), eine wässrige Dispersion mit 5 Teilen eines zweiten Polymers (2) und eine wässrige Dispersion mit 5 Teilen Tackifierharz (3) werden vermischt (4). Es bildet sich eine Mischdispersion (5). Aus der Mischdispersion (5) wird durch Trocknen und Filmbildung (6) ein Polymerfilm (9) erzeugt. Der Polymerfilm (9) ist mehrphasig und weist kontinuierliche Bereiche des ersten Polymers (7) und kontinuierliche Bereiche des zweiten Polymers (8) auf. In den Bereichen des ersten Polymers (7) ist ein höherer Anteil (z.B. 3 Teile) an Tackifier gelöst als in den Bereichen des zweiten Polymers (8),

Die Beziehung zwischen den Glasübergangstemperaturen der in der Polymermischung eingesetzten Polymeren und der Löslichkeit der Tackifier in den verfilmten Polymeren ist erfindungsgemäß so eingestellt, dass sich mehr Tackifier in dem "weicheren" Polymer (erstes Polymer mit niedrigerer Glasübergangstemperatur) befindet und weniger Tackifier in dem "härteren" Polymer (zweites Polymer mit höherer Glasübergangstemperatur).

Es wurde gefunden, dass die Löslichkeit von Tackifiern in einem Polymerfilm durch verschiedene alternative oder kumulative Maßnahmen gezielt so eingestellt werden, kann, dass die gewünschte Verteilung des Tackifiers in den verschiedenen Phasen eines mehrphasigen Polymerfilms erreicht wird. Es hat sich gezeigt, dass die maximale Tackifierlöslichkeit ein Anzeichen ist für die Verteilung des Tackifiers in den verschiedenen Phasen eines mehrphasigen Polymerfilms. Es befindet sich mehr Tackifier in der Phase desjenigen Polymers, welches die größere maximale Tackifierlöslichkeit besitzt und zwar auch dann, wenn in einem mehrphasigen Polymerfilm weniger als die maximal lösliche Menge an Tackifiern eingesetzt wird. Die maximale Löslichkeit des Tackifiers in der Phase des ersten Polymers ist vorzugsweise mindestens 20%, insbesondere mindestens 40% größer ist als die maximale Löslichkeit des Tackifiers in der Phase des zweiten Polymers

Ist die maximale Tackifierlöslichkeit für die Einzelpolymere bekannt oder gemessen, so kann sie falls erforderlich durch Erhöhung oder Erniedrigung in die gewünschte Richtung verschoben werden. Eine Erhöhung der Tackifierlöslichkeit kann z.B. erfolgen durch Verringerung des Vernetzungsgrades; oder durch Variation der Hauptmonomere; oder durch eine Variation des Gehaltes an hydrophilen Comonomeren. Eine Verringerung der Tackifierlöslichkeit kann z.B. erfolgen durch Erhöhung des Vernetzungsgrades; oder durch entsprechende Variation der Hauptmonomeren; oder durch entsprechende Variation an hydrophilen Comonomeren. So führt z.B. der Wechsel des Hauptmonomers von n-Butylacrylat zu Ethylhexylacrylat zu einer erhöhten Tackifierlöslichkeit. Hydrophile Comonomere, welche die Tackifierlöslichkeit verändern können sind z.B. Vinylacetat, Methylacrylat oder Methylmethacrylat.

Besonders vorteilhaft ist es, den Vernetzungsgrad zur Einstellung der Tackifierlöslichkeit zu verwenden. Ein Erhöhung des Vernetzungsgrades führt zu einer verringerten Tackifierlöslichkeit, wobei die Glasübergangstemperatur aber nicht oder nur geringfügig beeinflusst wird. Eine Ausführungsform der Erfindung betrifft daher einen Polymerfilm wobei das zweite Polymer einen höheren Vernetzungsgrad aufweist als das erste Polymer und/oder die Monomerenmischung, aus der das zweite Polymer gebildet ist, einen höheren Anteil an mehrfach ungesättigten, vernetzenden Monomeren enthält als die Monomerenmischung, aus der das erste Polymer gebildet ist.

Eine Vernetzung kann durch Copolymerisieren von vernetzenden Monomeren erfolgen. Vernetzende Monomere sind z.B. Monomere mit mindestens zwei nicht-konjugierten, polymerisierbaren Vinylgruppen. Diese Monomere können z.B. zu mindestens 0,01 Gew.%, vorzugsweise von 0,01 bis 0,5 Gew.% oder von 0,05 bis 0,1 Gew.% eingesetzt werden, wobei die genaue Menge so eingestellt wird, dass die gewünschte Tackifierlöslichkeit erreicht wird. Bevorzugte Vinylgruppen der vernetzenden Monomere sind Acryl- bzw. Methacrylgruppen. Genannt seien z.B. Divinylbenzol, Alkandioldiacrylate, Alkandioldimethacrylate, Allylacrylate und Allylmethacrylate. Besonders bevorzugt sind Alkandioldiacrylate und Alkandioldimethacrylate mit jeweils 2 bis 8, vorzugsweise 4 bis 6 C-Atomen in der Alkandiolgruppe. Ganz besonders bevorzugt sind Allylmethacrylat, Butandioldiacrylat, Butandioldimethacrylat, Hexandioldiacrylat und Hexandioldimethacrylat oder deren Gemisch. Umgekehrt lässt sich die Vernetzung reduzieren und damit die Tackifierlöslichkeit erhöhen durch den Einsatz von Molekulargewichtsreglern, z.B. Thiolverbindungen, wie sie unten näher beschrieben werden.

Eine Verringerung der Tackifierlöslichkeit kann auch durch eine Nachvernetzung erfolgen, wobei das primär gebildete Reaktionsprodukt nach der eigentlichen Polymerisation einer Nachbehandlung unterworfen wird und mit nichtionische Radikale bildenden Initiatoren umgesetzt wird. Hierfür geeignete Initiatoren sind z.B. Hydroxyradikale bildende Stoffe wie z.B. Wasserstoffperoxid oder organische Hydroperoxide, oder Alkoxyradikale bildende Stoffe wie z.B. organische Alkylperoxide. Beispiele für Initiatoren für die Nachbehandlung sind Wasserstoffperoxid, Dibenzoylperoxid, tert.-Butylperpivalat, tert.-Butyl-per-2-ethylhexanoat, Di-tert.-butylperoxid, Diamylperoxid, Dioctanoylperoxid, Didecanoylperoxid, Dilauroylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperbenzoat, tert.-Butylhydroperoxid. Vorzugsweise werden Peroxidverbindungen eingesetzt, die ausgewählt sind aus Wasserstoffperoxid, organischen Peroxiden und organischen Hydroperoxiden. Besonders bevorzugt ist, dass zur Nachbehandlung ein Red-Ox-Initiator-System eingesetzt wird, wobei als Oxidationskomponente mindestens eine Peroxidverbindung eingesetzt wird, ausgewählt aus Wasserstoffperoxid, organischen Peroxiden und organischen Hydroperoxiden und als Reduktionskomponente ein anorganisches oder organisches Reduktionsmittel eingesetzt wird. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme für die Nachbehandlung können unter Mitverwendung löslicher Metallverbindungen, deren metallische Komponente in mehreren Wertigkeitsstufen auftreten kann, verwendet werden. Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure oder tert-Butylhydroperoxid/ Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Für die Nachbehandlung besonders bevorzugt sind Wasserstoffperoxid/ Ascorbinsäure, tert-Butylhydroperoxid/Ascorbinsäure und tert.-Butylhydroperoxid/Acetonbisulfit. Die für die Nachbehandlung verwendeten Initiatormengen sind vorzugsweise von 0,001 bis 0,1 Gew.-Teile, besonders bevorzugt von 0,002 bis 0,05 Gew.-Teile, bezogen auf 100 Gew.-Teile Monomere. Die Zugabe der Initiatoren für die Nachbehandlung erfolgt, nachdem die Hauptpolymerisation der Monomere stattgefunden hat, d.h. nachdem vorzugsweise mehr als 50 Gew.%, insbesondere mindestens 70 Gew.% oder mindestens 90 Gew.% oder besonders bevorzugt 100 Gew.% aller Monomere zugegeben sind und vorzugsweise mehr als 50 Gew.%, insbesondere mindestens 70 Gew.% oder mindestens 90 Gew.% aller Monomere polymerisiert sind.

Das erste Polymer liegt, bezogen auf die Gesamtmenge des Films, vorzugsweise in einer Menge von 10 bis 60 Gew.-Teilen, besonders bevorzugt von 20 bis 50 Gew.-Teilen vor. Das zweite Polymer liegt, bezogen auf die Gesamtmenge des Films, vorzugsweise in einer Menge von 10 bis 60 Gew.-Teilen, besonders bevorzugt von 20 bis 50 Gew.-Teilen vor. Der Tackifier liegt, bezogen auf die Gesamtmenge des Films, vorzugsweise in einer Menge von 10 bis 40 Gew.-Teilen, besonders bevorzugt von 20 bis 30 Gew.-Teilen vor.

Die Glasübergangstemperatur der Polymere lässt sich bestimmen durch Differential Scanning Calorimetrie (ASTM D 3418-08, sog. "midpoint temperature"). Die Glasübergangstemperatur des ersten Polymers ist vorzugsweise kleiner 0 °C, bevorzugt -60 bis kleiner oder gleich -10°C oder -60 bis kleiner oder gleich -20°C oder -60°C bis kleiner oder gleich -20°C, besonders bevorzugt -60 bis kleiner oder gleich -30°C.

Die Glasübergangstemperatur des zweiten Polymers ist kleiner als 20°C und vorzugsweise -50 bis kleiner oder gleich 10 °C, bevorzugt -50 bis kleiner oder gleich 0°C oder - 50 bis kleiner oder gleich -10°C, besonders bevorzugt -50 bis kleiner oder gleich -20°C. Die Glasübergangstemperatur des zweiten Polymers ist vorzugsweise um mindestens 2 °C, besonders bevorzugt um mindestens 4 °C größer als die Glasübergangstemperatur des ersten Polymers.

Im Folgenden wird die Bezeichnung (Meth)acrylat und ähnliche Bezeichnungen als abkürzende Schreibweise verwendet für "Acrylat oder Methacrylat".

Bei den einzusetzenden Polymeren handelt es sich vorzugsweise um Polymere, die durch radikalische Polymerisation von ethylenisch ungesättigten Verbindungen (Monomeren) erhältlich sind. Das Polymer besteht vorzugsweise zu mindestens 40 Gew.% oder zu mindestens 60 Gew.%, oder zu mindestens 80 Gew.%, besonders bevorzugt zu mindestens 90 Gew.% aus so genannten Hauptmonomeren. Die Hauptmonomeren sind vorzugsweise ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Geeignete Monomere sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren.

Als Hauptmonomere bevorzugt sind C₁- bis C₁₀-Alkylacrylate und C₁- bis C₁₀-Alkyl-methacrylate, insbesondere C₁- bis C₈-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, Styrol sowie Mischungen dieser Monomere. Insbesondere sind die Polymere zu mindestens 60 Gew.%, besonders bevorzugt zu mindestens 80 Gew.% und ganz besonders bevorzugt zu mindestens 90 oder zu mindestens 95 Gew.% aus C₁ bis C₁₀ Alkyl(meth)acrylaten aufgebaut.

Das Polymer besteht vorzugsweise zu mindestens 50 Gew. %, bevorzugt zu mindestens 55 Gew.-%, besonders bevorzugt zu 55 bis 90 Gew.-% aus mindestens einem weichen Acrylatmonomer, ausgewählt aus Alkylacrylaten, welche, wenn sie als Homopolymer polymerisiert sind, eine Glasübergangstemperatur von kleiner 0 °C, bevorzugt kleiner -10°C oder kleiner -20°C,besonders bevorzugt kleiner -30°C aufweisen. Weiche Acrylatmonomere sind z.B. Acrylsäurealkylester mit einem C₂-C₁₀-Alkylrest. Zu nennen sind z.B. Ethylacrylat, n-Propylacrylat, Isobutylacrylat, sec-Butylacrylat, tert.-Butylacrylat, n-Butylacrylat, n-Hexylacrylat oder 2-Ethylhexylacrylat. Besonders bevorzugt sind n-Butylacrylat und 2-Ethylhexylacrylat und deren Gemisch.

Neben den weichen Acrylatmonomeren können die Polymere auch sogenannte harte Acrylatmonomere in Mengen von beispielsweise 1 bis 30 Gew.% enthalten, sofern die erfindungsgemäßen Bedingungen hinsichtlich der Glasübergangstemperaturen erfüllt sind. Harte Acrylatmonomere sind z.B. Alkylacrylate und Alkylmethacrylate mit jeweils 1 bis 10 C-Atomen in der Alkylgruppe, sofern die Glasübergangstemperatur des jeweiligen Homopolymers mindestens 60 °C, besonders bevorzugt mindestens 80°C beträgt. Bevorzugt sind Alkylmethacrylate mit 1 bis 4 C-Atomen in der Alkylgruppe. Harte Acrylatmonomere sind z.B. Methylmethacrylat, Ethylmethacrylat, Isobutylmethacrylat oder tert-Butylmethacrylat. Besonders bevorzugt ist Methylmethacrylat.

Neben den Hauptmonomeren kann das Polymer weitere Monomere enthalten, z.B. ethylenisch ungesättigte Monomere mit Carbonsäure-, Sulfonsäure- oder Phosphonsäuregruppen (Säuremonomere). Bevorzugt sind Carbonsäuregruppen. In einer Ausführungsform werden Säuremonomere zu mindestens 0,1 Gew.%, vorzugsweise von 0,1 bis 10 Gew.%, oder von 0,5 bis 8 Gew.%, oder von 1 bis 6 Gew.%, bezogen auf das Polymer eingesetzt. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure. Die Säuregruppen enthaltenden Monomeren können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Weitere Monomere sind z.B. auch Hydroxylgruppen enthaltende Monomere, insbesondere C₁-C₁₀-Hydrokyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf.

Eine bevorzugte Ausführungsform der Erfindung ist dadurch gekennzeichnet, dass das erste und das zweite Polymer aufgebaut sind aus
(a) mindestens 60 Gew. % mindestens eines Acrylatmonomers, ausgewählt aus C1-bis C10-Alkylacrylaten, welche, wenn sie als Homopolymer polymerisiert sind, eine Glasübergangstemperatur von kleiner 0 °C aufweisen,
(b) mindestens 0,1 Gew.% mindestens eines ethylenisch ungesättigten Säuremonomers, und
(c) optional aus weiteren, von den Monomeren (a)-(b) verschiedenen Monomeren, wobei Art und Menge der Monomeren so eingestellt sind, dass die Glasübergangstemperatur des zweiten Polymers mindestens 2 °C größer ist als die Glasübergangstemperatur des ersten Polymers.

In einer bevorzugten Ausführungsform der Erfindung ist das erste Polymer aufgebaut aus
(a) 60 bis 90 Gew. % 2-Ethylhexylacrylat,
(b) 0,1 bis 5 Gew.% Säuremonomere, ausgewählt aus Acrylsäure, Methacrylsäure und deren Gemisch, und
(c) 5 bis 29.9 Gew.% weiteren, von den Monomeren (a)-(b) verschiedenen Monomeren;
und das zweite Polymer ist aufgebaut aus
(a) 60 bis 90 Gew. % n-Butylacrylat,
(b) 0,1 bis 5 Gew.% Säuremonomere, ausgewählt aus Acrylsäure, Methacrylsäure und deren Gemisch, und
(c) 5 bis 29.9 Gew.% weiteren, von den Monomeren (a)-(b) verschiedenen Monomeren.

Ein bevorzugter Polymerfilm ist dadurch gekennzeichnet, dass
(A) 20 bis 60 Gew.% des ersten Polymers, gebildet aus
   (a) 60 bis 90 Gew. % 2-Ethylhexylacrylat,
   (b) 0,1 bis 5 Gew.% Säuremonomere, ausgewählt aus Acrylsäure, Methacrylsäure und deren Gemisch, und
   (c) 5 bis 29.9 Gew.% weiteren, von den Monomeren (a)-(b) verschiedenen Monomeren;
(B) 20 bis 60 Gew.% des zweiten Polymers, gebildet aus
   (a) 60 bis 90 Gew. % n-Butylacrylat,
   (b) 0,1 bis 5 Gew.% Säuremonomere, ausgewählt aus Acrylsäure, Methacrylsäure und deren Gemisch, und
   (c) 5 bis 29.9 Gew.% weiteren, von den Monomeren (a)-(b) verschiedenen Monomeren; und
(C) 15 bis 50 Gew.% Tackifier auf Basis von Naturharzen enthalten sind.

Die Herstellung der Polymere erfolgt in einer bevorzugten Ausführungsform durch Emulsionspolymerisation, es handelt sich daher um ein Emulsionspolymerisat. Bei der Emulsionspolymerisation werden ionische und/oder nicht-ionische Emulgatoren und/ oder Schutzkolloide bzw. Stabilisatoren als grenzflächenaktive Verbindungen verwendet. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Trialkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel I 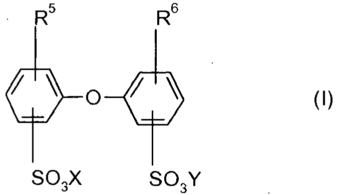 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z.B. Dowfax^{®}2 A1, Emulan^{®} NP 50, Dextrol^{®}OC 50, Emulgator 825, Emulgator 825 S, Emulan^{®}OG, Texapon^{®} NSO, Nekanil^{®} 904 S, Lumiten^{®} I-RA, Lumiten^{®} E 3065, Disponil^{®} FES 77, Lutensol^{®} AT 18, Steinapol^{®} VSL, Emulphor^{®} NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Molekulargewichtsregler eingesetzt werden, z.B. in Mengen von 0 bis 0,8 Gew.-Teile, bezogen auf 100 Gew.-Teile der zu polymerisierenden Monomeren, durch die Molmasse verringert wird. Geeignet sind z.B. Verbindungen mit einer Thiolgruppe wie tert.-Butylmercaptan, Thioglycolsäureester, z.B. 2-Ethylhexylthioglycolat, Mercaptoethynol, Mercaptopropyltrimethoxysilan, n-Dodecylmercaptan oder tert.-Dodecylmercaptan. Geeignete Regler sind auch C6- bis C20-Kohlenwasserstoffe, welche bei Wasserstoffabstraktion ein Pentadienylradikal bilden, z.B. Terpinolen.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in welcher der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Gegenstand der Erfindung sind auch wässrige Polymerdispersionen zur Bildung der erfindungsgemäßen Polymerfilme mit mehrphasiger Filmmorphologie, enthaltend ein wie oben beschriebenes erstes Polymer in dispergierter Form, mindestens ein davon verschiedenes, wie oben beschriebenes zweites Polymer in dispergierter Form und mindestens einen in der Polymerdispersion gelösten oder dispergierten Tackifier, wobei die Glasübergangstemperatur des zweiten Polymers größer ist als die Glasübergangstemperatur des ersten Polymers und kleiner ist als 20°C; und wobei die maximale Löslichkeit des Tackifiers in dem ersten Polymer größer ist als die maximale Löslichkeit des Tackifiers in dem zweiten Polymer

Das so hergestellte Polymer wird vorzugsweise in Form seiner wässrigen Dispersion zur Erzeugung des Polymerfilms verwendet. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Besonders bevorzugt liegt die mittlere Teilchengröße zwischen 140 und 200 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Erfindungsgemäß wird mindestens ein Tackifier verwendet. Tackifier sind dem Fachmann an sich bekannt. Es handelt sich dabei um Zusatzstoffe für Klebstoffe oder Elastomere, die deren Autoadhäsion (Tack, Eigenklebrigkeit, Selbsthaftung) erhöhen. Sie haben in der Regel eine relativ niedrige Molmasse (Mn ca. 200 - 2000 g/mol), eine Glasübergangstemperatur, die oberhalb derjenigen der Elastomere liegt und eine ausreichende Verträglichkeit mit diesen, d.h. die Tackifier lösen sich zumindest teilweise in aus den Elastomeren gebildeten Polymerfilmen.

Die Gewichtsmenge der Tackifier beträgt vorzugsweise 5 bis 100 Gew.-Teile, besonders bevorzugt 10 bis 50 Gew.-Teile, bezogen auf 100 Gew.-Teile Polymer (fest/fest).

In dem erfindungsgemäßen, mehrphasigen Polymerfilm ist der Gewichtsanteil des Tackifiers in den Bereichen (der Phase) des ersten Polymers vorzugsweise mindestens 20%, besonders bevorzugt mindestens 40 % größer ist als der Gewichtsanteil des Tackifiers in den Bereichen (der Phase) des zweiten Polymers.

Geeignete Tackifier sind z.B. solche auf Basis von Naturharzen, wie z.B. Kolophoniumharze. Tackifier auf Basis von Naturharzen umfassen die Naturharze selber sowie deren beispielsweise durch Disproportionierung oder Isomerisierung, Polymerisation, Dimerisation oder Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Des weiteren finden auch Phenol-Harze, Kohlenwasserstoffharze, z.B. Cumaron-Inden-Harze, Polyterpen-Harze, Terpen-Oligomere, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung als Tackifier. Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈-Alkyl(meth)-acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten.

Der Gehalt an in verschiedenen Phasen eines mehrphasigen Polymerfilms gelöstem Tackifier kann mit der in den Beispielen beschriebenen Methode gemessen werden. Durch AFM-Messung (Atomic Force Microscope) im HarmoniX™ Mess-Modus kann das E-Modul als Maß für die Härte eines Polymerfilms gemessen werden. Mit einem reinem Polymer und ansteigenden Mengen an Tackifier kann eine Korrelation zwischen E-Modul und Tackifiergehalt erstellt werden. Mit zunehmendem Tackifiergehalt nimmt das E-Modul solange zu, bis die maximale Löslichkeit des Tackifiers in dem Polymerfilm erreicht ist und erreicht dann einen Plateauwert. Auf diese Weise kann eine Eichkurve erstellt und die maximale Tackifierlöslichkeit in dem Polymerfilm bestimmt werden. Durch Messung der unterschiedlichen E-Module der unterschiedlichen Bereiche eines mehrphasigen Polymerfilms und Vergleich mit den zuvor erstellten Eichkurven kann der Tackifiergehalt in jedem einzelnen Bereich bzw. in jeder Phase des mehrphasigen Polymerfilms festgestellt werden.

Gegenstand der Erfindung ist auch ein Verfahren zur Herstellung von Polymerfilmen mit mehrphasiger Filmmorphologie, wobei
(1) ein erstes Polymer und mindestens ein zweites Polymer zur Verfügung gestellt werden und die Polymere nach dem Verfilmen einer Mischung der Polymere einen Film mit unterschiedlichen Bereichen bilden, wobei die Glasübergangstemperatur des zweiten Polymers größer ist als die Glasübergangstemperatur des ersten Polymers und kleiner ist als 20°C;
(2) mindestens ein Tackifier zur Verfügung gestellt wird, welcher sowohl in den Bereichen des ersten Polymers als auch in den Bereichen des zweiten Polymers löslich ist; wobei die maximale Löslichkeit des Tackifiers in den Bereichen des ersten Polymers größer ist als die maximale Löslichkeit des Tackifiers in den Bereichen des zweien Polymers;
(3) aus dem ersten Polymer, dem zweiten Polymer und dem Tackifier eine wässrige Dispersion hergestellt wird;
(4) die Dispersion auf ein Substrat aufgebracht wird; und
(5) durch Verdampfen des Wassers ein Film gebildet wird.

Vorzugsweise handelt es sich bei dem erfindungsgemäßen Verfahren um ein Verfahren zum Verkleben von zwei Substraten, wobei das erste Substrat nach dem Aufbringen der wässrigen Dispersion mit einem zweiten Substrat in Kontakt gebracht und eine Klebeverbindung zwischen den beiden Substraten erzeugt wird.

Die erfindungsgemäßen Polymerfilme und Polymerdispersionen können als Klebstoff, als Beschichtungsmittel oder als Dichtungsmittel verwendet werden. Bevorzugt sind Anwendungen als Klebstoff, insbesondere als Haftklebstoff. Klebstoff-, Beschichtungsöde Dichtungszusammensetzungen können allein aus einer erfindungsgemäßen wässrigen Dispersion bestehen. Sie können aber auch weitere Zusatzstoffe enthalten wie z.B. Füllstoffe, Farbstoffe, Verlaufsmittel oder Verdicker.

Insbesondere eignen sich die erfindungsgemäßen Polymerfilme und Polymerdispersionen als Haftklebstoffe zur Herstellung von selbstklebenden Artikeln, wie Etiketten, Klebebändern oder Klebefolien, z.B. Schutzfolien. Die selbstklebenden Artikel bestehen im Allgemeinen aus einem Träger und einer ein- oder beidseitig, vorzugsweise einseitig aufgebrachten Schicht des Klebstoffs. Bei dem Trägermaterial kann es sich z.B. um Papier oder um Kunststofffolien, z.B. aus Polyolefinen oder PVC handeln. Besonders bevorzugt ist eine Anwendung zur Herstellung von selbstklebenden Papieretiketten, selbstklebenden Folienetiketten oder Klebebändern.

Zur Herstellung der Klebstoffschicht auf dem Trägermaterial kann das Trägermaterial in üblicher Weise beschichtet werden. Die erhaltenen, beschichteten Substrate werden z.B. als Selbstklebeartikel, wie Etiketten, Klebebänder oder Folien verwendet.

Die erfindungsgemäßen Polymerfilme und Polymerdispersionen haben gute anwendungstechnische Eigenschaften, insbesondere eine gute Schälfestigkeit (Adhäsion) und gute Scherfestigkeit (Kohäsion), wobei die Adhäsions- und Kohäsionswerte für die erfindungsgemäße Mischung von Tackifier und (mindestens) zwei Polymeren über die Werte für Zusammensetzungen aus Tackifier und nur jeweils einem Polymer hinausgehen.

### Beispiele

### Einsatzstoff:

- EHA: 2-Ethylhexylacrylat
- BA: n-Butylacrylat
- VAc: Vinylacetat
- MMA: Methylmethacrylat
- EA: Ethylacrylat
- S: Styrol
- HPA: Hydroxypropylacrylat
- AS: Acrylsäure
- NaPS: Natriumpersulfat
- Dermulsene® DP 604: wässrige Tackifierdispersion, 53%ig, basierend auf Kolophoniumester / Kohlenwasserstoff Hybridharz
- Snowtack® 932: Tackifier auf Kolophoniumbasis
- Arizona® XR 4338: Tackifier auf Kolophoniumbasis
- Euro Yser®: Tackifier auf Kolophoniumbasis

Durch Emulsionspolymerisation wurden zwei Polymerdispersionen A und B aus den in Tabelle 1 aufgeführten Bestandteilen hergestellt.

**Tabelle 1: Polymerdispersionen A und B; Mengenangaben in Gew.-Teilen**

| | Dispersion A | Dispersion B |
|---|---|---|
| EHA | 79,5 | 10 |
| BA | 0 | 75,25 |
| VAc | 8 | 5 |
| MMA | 8 | 0 |
| EA | 0 | 5 |
| S | 2 | 2 |
| HPA | 2 | 2 |
| AS | 0,5 | 0,75 |
| NaPS | 0,5 | 0,5 |

Es wurden wässrige Polymerdispersionen mit den in Tabelle 2 aufgeführten Eigenschaften erhalten.

**Tabelle 2: Eigenschaften der Dispersionen A und B**

| | Dispersion A | Dispersion B |
|---|---|---|
| Tg [°C] ¹⁾ | -42 | -36 |
| Gelgehalt | 20 Gew.% | 30 Gew.% |
| Maximale Tackifierlöslichkeit ²⁾ | > 35 Gew.% | < 30 Gew.% |

| | | |
|---|---|---|
| ¹⁾ Glasübergangstemperatur ²⁾ Maximale Löslichkeit von Dermulsene® DP 604 im Polymerfilm | | |

### Messung der maximalen Tackifierlöslichkeit

Die maximale Löslichkeit eines Tackifiers in einem Polymerfilm wird gemessen, indem mehrere Filme, hergestellt aus Mischungen einer einzelnen Polymerdispersion mit steigendem Tackifieranteil, durch AFM-Messung (Atomic Force Microscope) charakterisiert werden. Dazu wird ein Anschnitt eines Dispersionsfilmes im HarmoniX™ Mode abgebildet und das E-Modul bestimmt. Ist der Tackifier nicht mehr im Polymer löslich, bilden sich harte Agglomerate aus Tackifier in der Zwickelphase und das E-Modul der Teilchen steigt nicht weiter an. Beides lässt sich anhand eines HarmoniX™-AFM Bildes qualitativ und quantitativ nachweisen. Für die Messung kann das Gerät Dimension V der Firma Veeco verwendet werden mit einem weichen HarmoniX™ freitragendem Arm (ca. 40 MPa- 700 MPa).

### Messung der Tackifierverteilung im Polymerfilm

Die Tackifierverteilung in einem aus einer Mischung von mehreren Polymerdispersionen gebildeten mehrphasigen Polymerfilm wird gemessen, indem ein Anschnitt des Polymerfilms im HarmoniX™ Mode abgebildet und das E-Modul bestimmt wird. Die unterschiedliche Verteilung wird durch unterschiedliche E-Moduli der einzelnen Phasen des Polymerfilms messbar. Um die quantitative Verteilung zu bestimmen, werden Vergleichsmessungen an den reinen Dispersionen mit unterschiedlichen Tackifieranteilen herangezogen. Mit einem reinem Polymer und ansteigenden Mengen an Tackifier kann eine Korrelation zwischen E=Modul und Tackifiergehalt erstellt werden. Mit zunehmendem Tackifiergehalt nimmt das E-Modul solange zu, bis die maximale Löslichkeit des Tackifiers in dem Polymerfilm erreicht ist und erreicht dann einen Plateauwert. Auf diese Weise kann eine Eichkurve erstellt und die maximale Tackifierlöslichkeit in dem Polymerfilm bestimmt werden. Durch Messung der unterschiedlichen E-Module der unterschiedlichen Bereiche eines mehrphasigen Polymerfilms und Vergleich mit den zuvor erstellten Eichkurven kann der Tackifiergehalt in jedem einzelnen Bereich bzw. in jeder Phase des mehrphasigen Polymerfilms bestimmt werden.

Aus den Polymerdispersionen A und B und verschiedenen Tackifiern wurden die Beispielzusammensetzungen B1 - B6 hergestellt. Gewichtsteile beziehen sich jeweils auf Feststoff.

### Beispiel B1:

70 Gew.-Teile Polymerdispersion A
30 Gew.-Teile Tackifier (Dermulsene® DP 604)

### Beispiel B2:

70 Gew.-Teile Polymerdispersion B
30 Gew.-Teile Tackifier (Dermulsene® DP 604)

### Beispiel B3:

35 Gew.-Teile Polymerdispersion A
35 Gew.-Teile Polymerdispersion B
30 Gew.-Teile Tackifier (Dermulsene® DP 604)

### Beispiel B4:

35 Gew.-Teile Polymerdispersion A
35 Gew.-Teile Polymerdispersion B
30 Gew.-Teile Tackifier (Snowtack® 932)

### Beispiel B5:

35 Gew.-Teile Polymerdispersion A
35 Gew.-Teile Polymerdispersion B
30 Gew.-Teile Tackifier (Arizona® XR 4338)

### Beispiel B6:

35 Gew.-Teile Polymerdispersion A
35 Gew.-Teile Polymerdispersion B
30 Gew.-Teile Tackifier (Euro Yser®)

| | E-Modul, Phase A | E-Modul, Phase B |
|---|---|---|
| Dispersion A | 27 MPa | - |
| Dispersion B | - | 23 MPa |
| Dispersion A + Dispersion B (50/50) | 22 MPa | 22 MPa |
| B1 | 164 MPa | - |
| B2 | - | 107 MPa |
| B3 | 249 MPa | 80 MPa |
| B4 | 160 MPa | 103 MPa |
| B5 | 140 MPa | 94 MPa |
| B6 | 165 MPa | 93 MPa |

Zusatz von Tackifier zu den reinen Polymerdispersionen führt zu einer deutlichen Erhöhung des E-Moduls (B1 bzw. B2). Bei allen erfindungsgemäßen Beispielen B3-B6 bilden sich mehrphasige Filme mit zwei unterschiedlichen Polymerphasen, wobei beide Phasen Tackifier aufnehmen, sich der Tackifier aber jeweils ungleichmäßig auf die beiden Polymerphasen der Filme verteilt. Dies wird dadurch deutlich, dass das E-Modul der Polymerphase A der Polymermischung (B3) größer ist als das E-Modul des reinen Polymers A (B1) und das E-Modul der Polymerphase B der Polymermischung (B3) demgegenüber aber kleiner ist als das E-Modul des reinen Polymers B (B2).

### Anwendungstechnische Prüfungen

### a) Schälfestigkeit (Adhäsion)

Die Schälfestigkeit ist die Kraft, die ein auf ein Trägermaterial aufgebrachter Klebstoff bei einer definierten Abzugsgeschwindigkeit dem Abziehen vom Substrat entgegensetzt.

Der zu prüfende Klebstoff wird mittels eines geeigneten Laborbeschichtungstisches in der gewünschten Schichtdicke auf das Trägermaterial aufgetragen und 3 Minuten bei 90° C im Umlufttrockenschrank getrocknet. Aus dem beschichteten Trägermaterial werden in Beschichtungsrichtung 25 mm breite Prüfstreifen geschnitten und mindestens 16 Stunden bei Normklima (23° C, 50% relative Luftfeuchte) gelagert. Jeweils einer der Prüfstreifen wird auf das Prüfsubstrat aufgelegt und mit einer 1 kg schweren Rolle angerollt. Die Prüfung erfolgt bei Normklima an einer Zugprüfmaschine. Nach Ablauf der vorgegebenen Verweilzeit wird der Prüfstreifen mit 300 mm/min unter einem 180° Winkel von der Prüffläche abgezogen d.h. der Prüfstreifen wird umgebogen und parallel zum Prüfsubstrat abgezogen und der dazu benötigte Kraftaufwand gemessen.

Es werden mindestens 3 Einzelmessungen durchgeführt. Die Angabe der Prüfergebnisse erfolgt in N/mm Breite.

Die Untersuchungen wurden mit folgenden Parametern durchgeführt:
Trägermaterial: Etikettenpapier 75 g/qm - ungeprimert
Prüfklima: 23°C, 50% rel. Luftfeuchte
Prüfstreifenbreite: 25mm
Kleberauftragsmenge: 20 g/m²
Substrat: Polyethylen

Die Ergebnisse sind in Tabelle 3 aufgeführt.

### b) Scherfestigkeit (Kohäsion)

Die Scherfestigkeit ist ein Maß für die Kohäsion. Der zu prüfende Klebstoff wird mittels eines geeigneten Laborbeschichtungstisches in der gewünschten Schichtdicke (ca. 20 g/m²) auf das Trägermaterial aufgetragen und 3 Minuten bei 90° C im Umlufttrockenschrank getrocknet. Aus dem beschichteten Trägermaterial werden in Beschichtungsrichtung Prüfstreifen von 12,5 mm und von 2 cm Breite geschnitten und mindestens 24 Stunden bei Normklima (23° C, 50% relative Luftfeuchte) gelagert.

Die Prüfstreifen werden so auf den Rand eines Prüfblechs aus Edelstahl verklebt, dass sich eine Verklebungsfläche von 12,5 mm x 12,5 mm ergibt. 20 Minuten nach dem Verkleben wird am überstehenden Ende des Prüfstreifens ein 500 g-Gewichts befestigt und das Prüfblech senkrecht aufgehängt. Umgebungsbedingungen: 23 °C, 50 % relative Luftfeuchtigkeit. Als Scherfestigkeit wird die Zeit bis zum Versagen der Verklebung unter Einfluss des Gewichts als Mittelwert aus den Ergebnissen von drei Prüfkörpern in Stunden angegeben.

Die Ergebnisse sind in Tabelle 3 aufgeführt.

**Tabelle 3 Anwendungstechnische Prüfungen**

| | Tackifierverteilung in Polymerphasen A und B | Schälfestigkeit nach 1 min (N/25 mm) | Scherfestigkeit [h] |
|---|---|---|---|
| B1 (Polymer A) | | 17,4 | 4,6 |
| B2 (Polymer B) | | 13,8 | 10,6 |
| B3 Polymer A+B) | Polymerphase A: 35 | 18,0 | 12,0 |
| | Polymerphase B: 25 | | |

Die Ergebnisse zeigen, dass die Adhäsions- und Kohäsionswerte für das erfindungsgemäße Beispiel B3 mit Gehalt an einer Polymermischung und mit ungleichmäßiger

Tackifierverteilung die Werte für die Vergleichszusammensetzungen B1 und B2 mit Gehalt an jeweils nur einem Polymer und Tackifier signifikant übertreffen.

## Patentansprüche

1. Polymerfilm mit mehrphasiger Filmmorphologie, wobei der Film innerhalb einer Schicht Bereiche eines ersten Polymers und Bereiche mindestens eines zweiten Polymers aufweist;
wobei der Film hergestellt wird aus einer wässrigen Polymerdispersion, enthaltend das erste Polymer in dispergierter Form, mindestens ein zweites Polymer in dispergierter Form und mindestens einen Tackifier;
wobei die Glasübergangstemperatur des zweiten Polymers größer ist als die Glasübergangstemperatur des ersten Polymers und kleiner ist als 20°C;
wobei die Konzentration des Tackifiers im Polymerfilm in den Bereichen des ersten Polymers größer ist als in den Bereichen des zweiten Polymers.

2. Polymerfilm gemäß Anspruch 1, **dadurch gekennzeichnet, dass** das erste Polymer in einer Menge von 10 bis 60 Gew.-Teilen,
das zweite Polymer in einer Menge von 10 bis 60 Gew.-Teilen, und
der Tackifier in einer Menge von 10 bis 40 Gew.-Teilen enthalten ist.

3. Polymerfilm gemäß einem der vorhergehenden Ansprüche, **dadurch gekennzeichnet, dass** die Glasübergangstemperatur des ersten Polymers im Bereich von -60 °C bis kleiner oder gleich -10 °C liegt und die Glasübergangstemperatur des zweiten Polymers im Bereich von -50 °C bis kleiner oder gleich 10 °C liegt,
wobei die Glasübergangstemperatur des zweiten Polymers mindestens 2 °C größer ist als die Glasübergangstemperatur des ersten Polymers.

4. Polymerfilm gemäß einem der vorhergehenden Ansprüche, **dadurch gekennzeichnet, dass** der Gewichtsanteil des Tackifiers im Polymerfilm in den Bereichen des ersten Polymers mindestens 20% größer ist als der Gewichtsanteil des Tackifiers in den Bereichen des zweiten Polymers.

5. Polymerfilm gemäß einem der vorhergehenden Ansprüche, **dadurch gekennzeichnet, dass** der Tackifier ausgewählt ist aus der Gruppe bestehend aus Tackifiern auf Basis von Naturharzen, Phenol-Harze, Cumaron-Inden-Harze, Polyterpen-Harze, Terpen-Oligomere, Kohlenwasserstoffharze auf Basis ungesättigter CH-Verbindungen.

6. Polymerfilm gemäß einem der vorhergehenden Ansprüche, **dadurch gekennzeichnet, dass** das erste und das zweite Polymer erhältlich sind durch radikalische Polymerisation von ethylenisch ungesättigten Verbindungen und zu mindestens 60 Gew.-% aufgebaut sind aus Hauptmonomeren, welche ausgewählt sind aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, wobei Art und Menge der Monomeren so eingestellt sind, dass die Glasübergangstemperatur des zweiten Polymers mindestens 2 °C größer ist als die Glasübergangstemperatur des ersten Polymers.

7. Polymerfilm gemäß dem vorhergehenden Anspruch, **dadurch gekennzeichnet, dass** das erste und das zweite Polymer jeweils zu mindestens 60 Gew. % aus C₁ bis C₁₀ Alkyl(meth)acrylaten aufgebaut sind.

8. Polymerfilm gemäß einem der vorhergehenden Ansprüche, **dadurch gekennzeichnet, dass** das erste und das zweite Polymer erhältlich sind durch radikalische Polymerisation von ethylenisch ungesättigten Verbindungen und aufgebaut sind aus
(a) mindestens 60 Gew. % mindestens eines Acrylatmonomers, ausgewählt aus C1- bis C10-Alkylacrylaten, welche, wenn sie als Homopolymer polymerisiert sind, eine Glasübergangstemperatur von kleiner 0 °C aufweisen,
(b) mindestens 0,1 Gew.% mindestens eines ethylenisch ungesättigten Säuremonomers, und
(c) optional aus weiteren, von den Monomeren (a)-(b) verschiedenen Monomeren, wobei Art und Menge der Monomeren so eingestellt sind, dass die Glasübergangstemperatur des zweiten Polymers mindestens 2 °C größer ist als die Glasübergangstemperatur des ersten Polymers.

9. Polymerfilm gemäß einem der vorhergehenden Ansprüche, **dadurch gekennzeichnet, dass** das zweite Polymer einen höheren Vernetzungsgrad aufweist als das erste Polymer und/oder die Monomerenmischung, aus der das zweite Polymer gebildet ist, einen höheren Anteil an mehrfach ungesättigten, vernetzenden Monomeren enthält als die Monomerenmischung, aus der das erste Polymer gebildet ist.

10. Polymerfilm gemäß dem vorhergehenden Anspruch, **dadurch gekennzeichnet, dass** die vernetzenden Monomere ausgewählt sind aus Divinylbenzol, Alkandioldiacrylaten, Alkandioldimethacrylaten, Allylacrylaten und Allylmethacrylaten.

11. Polymerfilm gemäß einem der vorhergehenden Ansprüche, **dadurch gekennzeichnet, dass** es sich um einen Haftklebstoff handelt.

12. Polymerfilm gemäß einem der vorhergehenden Ansprüche, **dadurch gekennzeichnet, dass** die maximale Löslichkeit des Tackifiers in der Phase des ersten Polymers mindestens 20% größer ist als die maximale Löslichkeit des Tackifiers in der Phase des zweiten Polymers.

13. Wässrige Polymerdispersion zur Bildung von Polymerfilmen mit mehrphasiger Filmmorphologie gemäß Anspruch 1, enthaltend ein erstes Polymer in dispergierter Form, mindestens ein davon verschiedenes, zweites Polymer in dispergierter Form und mindestens einen in der Polymerdispersion gelösten oder dispergierten Tackifier, wobei die Glasübergangstemperatur des zweiten Polymers größer ist als die Glasübergangstemperatur des ersten Polymers und kleiner ist als 20°C; und wobei die maximale Löslichkeit des Tackifiers in dem ersten Polymer größer ist als die maximale Löslichkeit des Tackifiers in dem zweiten Polymer.

14. Verfahren zur Herstellung von Polymerfilmen mit mehrphasiger Filmmorphologie, wobei
(1) ein erstes Polymer und mindestens ein zweites Polymer zur Verfügung gestellt werden und die Polymere nach dem Verfilmen einer Mischung der Polymere einen Film mit unterschiedlichen Bereichen innerhalb einer Schicht bilden, wobei die Glasübergangstemperatur des zweiten Polymers größer ist als die Glasübergangstemperatur des ersten Polymers und kleiner ist als 20°C;
(2) mindestens ein Tackifier zur Verfügung gestellt wird, welcher sowohl in den Bereichen des ersten Polymers als auch in den Bereichen des zweiten Polymers löslich ist; wobei die maximale Löslichkeit des Tackifiers in den Bereichen des ersten Polymers größer ist als die maximale Löslichkeit des Tackifiers in den Bereichen des zweien Polymers;
(3) aus dem ersten Polymer, dem zweiten Polymer und dem Tackifier eine wässrige Dispersion hergestellt wird;
(4) die Dispersion auf ein Substrat aufgebracht wird; und
(5) durch Verdampfen des Wassers ein Film gebildet wird.

15. Verfahren gemäß dem vorhergehenden Anspruch, **dadurch gekennzeichnet, dass** es sich um ein Verfahren zum Verkleben von zwei Substraten handelt, wobei das erste Substrat nach dem Aufbringen der wässrigen Dispersion mit einem zweiten Substrat in Kontakt gebracht und eine Klebeverbindung zwischen den beiden Substraten erzeugt wird.

16. Verwendung eines Polymerfilms mit mehrphasiger Filmmorphologie gemäß einem der Ansprüche 1 bis 12 oder einer Polymerdispersion gemäß Anspruch 13 als Klebstoff, Beschichtungsmittel oder Dichtungsmittel.

17. Verwendung eines Polymerfilms gemäß einem der Ansprüche 1 bis 12 oder einer Polymerdispersion gemäß Anspruch 13 als Haftklebstoff zur Herstellung von selbstklebenden Papieretiketten, selbstklebenden Folienetiketten oder Klebebändern.

## Claims

1. A polymer film with multiphase film morphology, where the film within a layer has regions of a first polymer and regions of at least one second polymer;
the film is prepared from an aqueous polymer dispersion comprising the first polymer in dispersed form, at least one second polymer in dispersed form, and at least one tackifier;
the glass transition temperature of the second polymer is greater than the glass transition temperature of the first polymer and is less than 20°C; and
the concentration of the tackifier in the polymer film in the regions of the first polymer is greater than in the regions of the second polymer.

2. The polymer film according to claim 1, which comprises
the first polymer in an amount of 10 to 60 parts by weight,
the second polymer in an amount of 10 to 60 parts by weight, and
the tackifier in an amount of 10 to 40 parts by weight.

3. The polymer film according to either of the preceding claims, wherein the glass transition temperature of the first polymer is in the range from - 60°C to less than or equal to -10°C and the glass transition temperature of the second polymer is in the range from -50°C to less than or equal to 10°C, and
the glass transition temperature of the second polymer is at least 2°C greater than the glass transition temperature of the first polymer.

4. The polymer film according to any of the preceding claims, wherein the weight fraction of the tackifier in the polymer film is at least 20% greater in the regions of the first polymer than the weight fraction of the tackifier in the regions of the second polymer.

5. The polymer film according to any of the preceding claims, wherein the tackifier is selected from the group consisting of natural-resin-based tackifiers, phenolic resins, coumarone-indene resins, polyterpene resins, terpene oligomers, and hydrocarbon resins based on unsaturated CH compounds.

6. The polymer film according to any of the preceding claims, wherein the first polymer and the second polymer are obtainable by free-radical polymerization of ethylenically unsaturated compounds and are composed to an extent of at least 60% by weight of principal monomers which are selected from C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers, the nature and amount of the monomers being adjusted such that the glass transition temperature of the second polymer is at least 2°C greater than the glass transition temperature of the first polymer.

7. The polymer film according to the preceding claim, wherein the first polymer and the second polymer are each composed to an extent of at least 60% by weight of C₁ to C₁₀ alkyl (meth)acrylates.

8. The polymer film according to any of the preceding claims, wherein the first polymer and the second polymer are obtainable by free-radical polymerization of ethylenically unsaturated compounds and are composed of
(a) at least 60% by weight of at least one acrylate monomer selected from C1 to C10 alkyl acrylates which when polymerized as a homopolymer have a glass transition temperature of less than 0°C,
(b) at least 0.1% by weight of at least one ethylenically unsaturated acid monomer, and
(c) optionally, further monomers different from monomers (a) - (b),
the nature and amount of the monomers being adjusted such that the glass transition temperature of the second polymer is at least 2°C greater than the glass transition temperature of the first polymer.

9. The polymer film according to any of the preceding claims, wherein the second polymer has a higher degree of crosslinking than the first polymer, and/or the monomer mixture from which the second polymer is formed comprises a higher fraction of polyunsaturated crosslinking monomers than the monomer mixture from which the first polymer is formed.

10. The polymer film according to the preceding claim, wherein the crosslinking monomers are selected from divinylbenzene, alkanediol diacrylates, alkanediol dimethacrylates, allyl acrylates and allyl methacrylates.

11. The polymer film according to any of the preceding claims, which is a pressure-sensitive adhesive.

12. The polymer film according to any of the preceding claims, wherein the maximum solubility of the tackifier in the phase of the first polymer is at least 20% greater than the maximum solubility of the tackifier in the phase of the second polymer.

13. An aqueous polymer dispersion for forming a polymer film with multiphase film morphology according to claim 1, comprising a first polymer in dispersed form, at least one different, second polymer in dispersed form, and at least one tackifier dispersed or dissolved in the polymer dispersion, the glass transition temperature of the second polymer being greater than the glass transition temperature of the first polymer and being less than 20°C; and the maximum solubility of the tackifier in the first polymer being greater than the maximum solubility of the tackifier in the second polymer.

14. A process for producing a polymer film with multiphase film morphology, wherein
(1) a first polymer and at least one second polymer are provided and the polymers, after filming of a mixture of the polymers, form a film having different regions within a layer, the glass transition temperature of the second polymer being greater than the glass transition temperature of the first polymer and being less than 20°C;
(2) at least one tackifier is provided which is soluble both in the regions of the first polymer and in the regions of the second polymer; the maximum solubility of the tackifier in the regions of the first polymer is greater than the maximum solubility of the tackifier in the regions of the second polymer;
(3) from the first polymer, the second polymer, and the tackifier an aqueous dispersion is prepared;
(4) the dispersion is applied to a substrate; and
(5) a film is formed by evaporation of the water.

15. The process according to the preceding claim, which is a process of adhesively bonding two substrates, the first substrate, following the application of the aqueous dispersion, being contacted with a second substrate, and an adhesive bond being produced between the two substrates.

16. The use of a polymer film with multiphase film morphology according to any of claims 1 to 12 or of a polymer dispersion according to claim 13 as an adhesive, coating or sealant.

17. The use of a polymer film according to any of claims 1 to 12 or of a polymer dispersion according to claim 13 as a pressure-sensitive adhesive for producing self-adhesive paper labels, self-adhesive film labels or adhesive tapes.

## Revendications

1. Film polymère à morphologie de film multiphase, le film comportant à l'intérieur d'une couche des zones d'un premier polymère et des zones d'au moins un deuxième polymère ;
le film étant produit à partir d'une dispersion aqueuse de polymères contenant le premier polymère sous forme dispersée, au moins un deuxième polymère sous forme dispersée et au moins un agent de pégosité ;
la température de transition vitreuse du deuxième polymère étant supérieure à la température de transition vitreuse du premier polymère et étant inférieure à 20 °C ;
la concentration de l'agent de pégosité dans le film polymère étant plus élevée dans les zones du premier polymère que dans les zones du deuxième polymère.

2. Film polymère selon la revendication 1, **caractérisé en ce que**
le premier polymère est contenu en une quantité de 10 à 60 parties en poids,
le deuxième polymère est contenu en une quantité de 10 à 60 parties en poids, et
l'agent de pégosité est contenu en une quantité de 10 à 40 parties en poids.

3. Film polymère selon l'une quelconque des revendications précédentes, **caractérisé en ce que** la température de transition vitreuse du premier polymère se situe dans la plage de -60 °C à ≤ -10 °C et la température de transition vitreuse du deuxième polymère se situe dans la plage de -50 °C à ≤ 10 °C,
la température de transition vitreuse du deuxième polymère étant supérieure d'au moins 2 °C à la température de transition vitreuse du premier polymère.

4. Film polymère selon l'une quelconque des revendications précédentes, **caractérisé en ce que** la proportion pondérale de l'agent de pégosité dans le film polymère est dans les zones du premier polymère supérieure d'au moins 20 % à la proportion pondérale de l'agent de pégosité dans les zones du deuxième polymère.

5. Film polymère selon l'une quelconque des revendications précédentes, **caractérisé en ce que** l'agent de pégosité est choisi dans le groupe constitué par des agents de pégosité à base de résines naturelles, résines phénoliques, résines coumaroneindène, résines polyterpéniques, oligomères de terpène, résines hydrocarbonées à base de composés à CH insaturé.

6. Film polymère selon l'une quelconque des revendications précédentes, **caractérisé en ce que** le premier polymère et le deuxième polymère peuvent être obtenus par polymérisation radicalaire de composés à insaturation éthylénique et sont constitués à raison d'au moins 60 % en poids de monomères principaux qui sont choisis parmi des (méth)acrylates d'alkyle en C₁-C₂₀, des esters vinyliques d'acides carboxyliques contenant jusqu'à 20 atomes de carbone, des composés vinylaromatiques ayant jusqu'à 20 atomes de carbone, des nitriles à insaturation éthylénique, des halogénures de vinyle, des éthers vinyliques d'alcools contenant de 1 à 10 atomes de carbone, des hydrocarbures aliphatiques ayant de 2 à 8 atomes de carbone et comportant une ou deux doubles liaisons ou des mélanges de ces monomères, la nature et la quantité des monomères étant ajustées de manière que la température de transition vitreuse du deuxième polymère soit supérieure d'au moins 2 °C à la température de transition vitreuse du premier polymère.

7. Film polymère selon la revendication précédente, **caractérisé en ce que** le premier polymère et le deuxième polymère sont constitués chacun à raison d' au moins 60 % en poids de (méth)acrylates d'alkyle en C₁-C₁₀.

8. Film polymère selon l'une quelconque des revendications précédentes, **caractérisé en ce que** le premier polymère et le deuxième polymère peuvent être obtenus par polymérisation radicalaire de composés à insaturation éthylénique et sont constitués
(a) d'au moins 60 % d'au moins un monomère acrylate, choisi parmi des acrylates d'alkyle en C₁-C₁₀ qui, lorsqu'ils sont polymérisés sous forme d'homopolymère, présentent une température de transition vitreuse inférieure à 0 °C,
(b) d'au moins 0,1 % en poids d'au moins un monomère acide à insaturation éthylénique, et
(c) en option d'autres monomères différents des monomères (a)-(b),
la nature et la quantité des monomères étant ajustées de manière que la température de transition vitreuse du deuxième polymère soit supérieure d'au moins 2 °C à la température de transition vitreuse du premier polymère.

9. Film polymère selon l'une quelconque des revendications précédentes, **caractérisé en ce que** le deuxième polymère présente un plus haut degré de réticulation que le premier polymère et/ou le mélange de monomères, à partir duquel est formé le deuxième polymère, contient une plus forte proportion de monomères réticulables, plusieurs fois insaturés, que le mélange de monomères à partir duquel est formé le premier polymère.

10. Film polymère selon la revendication précédente, **caractérisé en ce que** les monomères réticulables sont choisis parmi le divinylbenzène, les diacrylates d'alcanediols, les diméthacrylates d'alcanediols, les acrylates d'allyle et les méthacrylates d'allyle.

11. Film polymère selon l'une quelconque des revendications précédentes, **caractérisé en ce qu'**il s'agit d'un autoadhésif.

12. Film polymère selon l'une quelconque des revendications précédentes, **caractérisé en ce que** la solubilité maximale de l'agent de pégosité dans la phase du premier polymère est supérieure d'au moins 20 % à la solubilité maximale de l'agent de pégosité dans la phase du deuxième polymère.

13. Dispersion aqueuse de polymères destinée à la formation de films polymères à morphologie de film multiphase selon la revendication 1, contenant un premier polymère sous forme dispersée, au moins un deuxième polymère, différent de celui-ci, sous forme dispersée et au moins un agent de pégosité dissous ou dispersé dans la dispersion de polymères, la température de transition vitreuse du deuxième polymère étant supérieure à la température de transition vitreuse du premier polymère et étant inférieure à 20 °C ; et la solubilité maximale de l'agent de pégosité dans le premier polymère étant supérieure à la solubilité maximale de l'agent de pégosité dans le deuxième polymère.

14. Procédé pour la production de films polymères à morphologie de film multiphase, dans lequel
(1) on dispose un premier polymère et au moins un deuxième polymère et les polymères après la transformation en film d'un mélange des polymères forment un film comportant différentes zones à l'intérieur d'une couche, la température de transition vitreuse du deuxième polymère étant supérieure à la température de transition vitreuse du premier polymère et étant inférieure à 20 °C ;
(2) on dispose au moins un agent de pégosité, qui est soluble aussi bien dans les zones du premier polymère que dans les zones du deuxième polymère ; la solubilité maximale de l'agent de pégosité dans les zones du premier polymère étant supérieure à la solubilité maximale de l'agent de pégosité dans les zones du deuxième polymère ;
(3) on prépare une dispersion aqueuse à partir du premier polymère, du deuxième polymère et de l'agent de pégosité ;
(4) on applique la dispersion sur un support ; et
(5) un film est formé par évaporation de l'eau.

15. Procédé selon la revendication précédente, **caractérisé en ce qu'**il s'agit d'un procédé pour le collage de deux supports, le premier support étant après l'application de la dispersion aqueuse mis en contact avec un deuxième support et un assemblage par collage des deux supports étant réalisé.

16. Utilisation d'un film polymère à morphologie de film multiphase selon l'une quelconque des revendications 1 à 12 ou d'une dispersion de polymères selon la revendication 13, en tant qu'adhésif, produit de revêtement ou produit d'étanchéité.

17. Utilisation d'un film polymère selon l'une quelconque des revendications 1 à 12 ou d'une dispersion de polymères selon la revendication 13, en tant qu'adhésif pour la fabrication d'étiquettes autocollantes en papier, d'étiquettes autocollantes en film ou de rubans adhésifs.
